# EUROPÄISCHE PATENTSCHRIFT

(11) **EP 1 683 259 B1**
(45) Veröffentlichungstag und Bekanntmachung des Hinweises auf die Patenterteilung: **30.09.2009**
(21) Anmeldenummer: 04804348.3
(22) Anmeldetag: 28.12.2004
(51) Int. Cl.: H02P 6/00, H02P 6/08, H02P 6/10

(54) **ELEKTRONISCH KOMMUTIERTER MOTOR UND VERFAHREN ZUR STEUERUNG EINES SOLCHEN**
ELECTRONICALLY COMMUTATED MOTOR AND METHOD FOR CONTROLLING THE SAME
MOTEUR A COMMUTATION ELECTRONIQUE, ET PROCEDE POUR LE COMMANDER

(30) Priorität: 03.02.2004 DE 102004006449
(43) Veröffentlichungstag der Anmeldung: 26.07.2006
(73) Patentinhaber: ebm-papst St. Georgen GmbH & Co. KG, 78112 St. Georgen (DE)
(72) Erfinder: DORNHOF, Konstantin, 78194 Immendingen (DE)
(74) Vertreter: Raible, Tobias
(86) Internationale Anmeldenummer: PCT/EP2004/014759
(87) Internationale Veröffentlichungsnummer: WO 2005/076456

(56) Entgegenhaltungen:
- EP-A- 0 572 162
- EP-A- 0 892 492
- EP-A- 0 986 167
- US-B1- 6 377 109

## Beschreibung

Die Erfindung betrifft einen elektronisch kommutierten Motor und ein Verfahren zur Steuerung eines elektronisch kommutierten Motors.

Bei solchen Motoren ist für eine Vielzahl von Anwendungsfällen das Auftreten von Kommutierungsgeräuschen problematisch. Aus dem Stand der Technik ist hierfür eine Reihe von Lösungsansätzen bekannt. Allen Lösungsansätzen ist es gemein, dass sie sehr aufwändig und kostenintensiv sind.

Aufgabe der vorliegenden Erfindung ist es, Kommutierungsgeräusche zu verringern. Diese Aufgabe wird durch einen Motor nach Anspruch 1 gelöst.

Der Erfindung liegt die Erkenntnis zugrunde, dass eine geräuscharme Kommutierung durch einen zumindest während der Einschaltdauer der Statorwicklung im Wesentlichen konstanten Strom durch die Statorwicklung erreicht werden kann. Ein Grundgedanke der Erfindung besteht nun darin, den Arbeitsbereich des der Statorwicklung zugeordneten Feldeffekttransistors derart zu beeinflussen, dass er einen während der jeweiligen Bestromung im Wesentlichen konstanten Strom durch die Statorwicklung erzeugt. Hierfür ist ein dazu ausgebildetes Bauelement vorgesehen.

Gemäß einer bevorzugten Ausführungsform der Erfindung ist das Bauelement derart ausgebildet, dass der Feldeffekttransistor als Abschnürstromquelle betrieben wird.

In einer weiteren bevorzugten Ausführungsform der Erfindung weist das Bauelement einen Transistor auf. Mit anderen Worten erfolgt das Versetzen des der Statorwicklung zugeordneten Feldeffekttransistors in den Abschnürbereich mit Hilfe eines weiteren Transistors. Dieser weitere Transistor wird vorzugsweise mittels eines regelbaren Widerstandes oder mittels eines Mikrocontrollers angesteuert. Diese Ansteuerung führt zu einer Änderung der Leitfähigkeit des Transistors, was zu dem Verschieben des Arbeitspunktes in den gewünschten Bereich führt. Durch die Ansteuerung des Transistors wird die Stromstärke durch die Statorwicklung und damit die Drehzahl des Motors geändert.

In einer weiteren Ausführungsform der Erfindung ist es vorgesehen, den Strom in der Statorwicklung während des Betriebes des Motors dauerhaft im Wesentlichen konstant zu halten.

Gegenüber bekannten Lösungsansätzen wird eine geräuscharme Kommutierung erfindungsgemäß mit einem vergleichsweise geringen Materialaufwand und unter Verwendung einer vergleichsweise einfachen Schaltung ermöglicht. Die Erfindung ist dabei nicht auf einen bestimmten Motorentyp beschränkt.

Weitere Einzelheiten und vorteilhafte Weiterbildungen der Erfindung ergeben sich aus den im Folgenden beschriebenen und in den Zeichnungen dargestellten Ausführungsbeispielen. Es zeigt:
- Fig. 1: ein stark vereinfachtes Schaltbild eines elektronisch kommutierten Motors gemäß einer ersten Ausführungsform der Erfindung,
- Fig. 2: ein stark vereinfachtes Schaltbild eines elektronisch kommutierten Motors gemäß einer zweiten Ausführungsform der Erfindung,
- Fig. 3: eine schematische Darstellung des Kommutierungsstromes durch eine Statorwicklung nach dem Stand der Technik (Kurve A) sowie nach Ausführungsformen der Erfindung (Kurven B und C),
- Fig. 4: ein stark vereinfachtes Schaltbild eines elektronisch kommutierten Motors gemäß einer dritten Ausführungsform der Erfindung, und
- Fig. 5: ein Kennlinienfeld eines n-Kanal-Feldeffekttransistors.

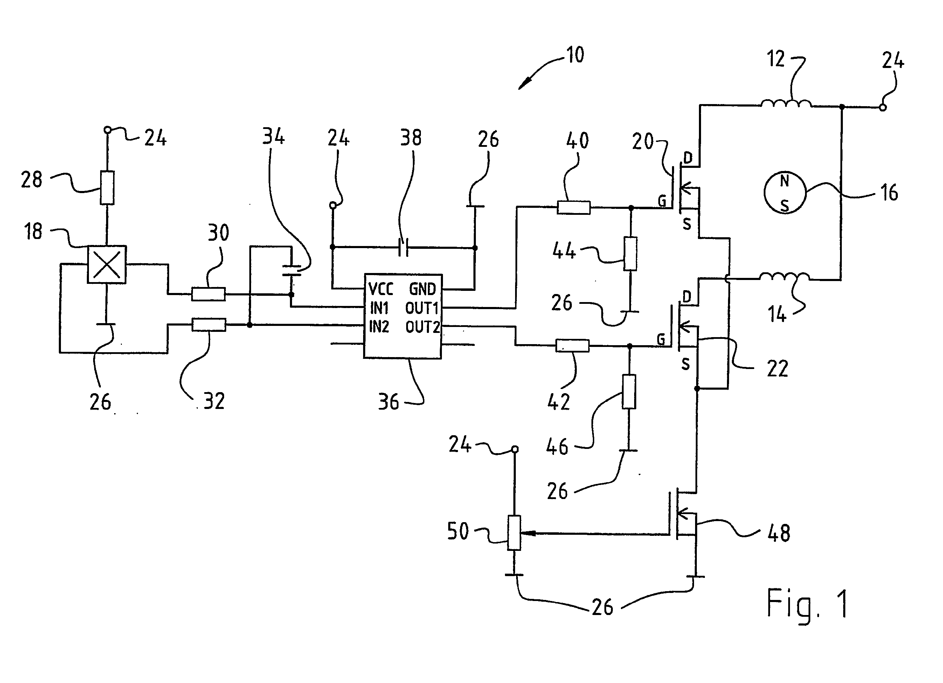

**Fig. 1** zeigt eine beispielhafte Darstellung eines zweisträngigen Elektromotors, wie er mit der vorliegenden Erfindung verwendet werden kann. Der elektronisch kommutierte Gleichstrommotor 10 weist zwei Statorwicklungsstränge 12, 14 und einen (nur symbolisch dargestellten) permanentmagnetischen Rotor 16 auf. In der Nähe des Rotors 16 ist ein Hallgenerator 18 angeordnet. Aus Gründen der Übersichtlichkeit ist dieser in dem vorliegenden Schaltbild an anderer Stelle abgebildet. Der Strang 12 liegt in Serie mit einem ersten Endstufentransistor 20 (MOSFET) und der Strang 14 liegt in Serie mit einem zweiten Endstufentransistor 22 (MOSFET). Die Stränge 12, 14 sind mit einer Plusleitung 24 verbunden. Plusleitung 24 und Minusleitung 26 sind im Betrieb mit einem Netzgerät (nicht dargestellt) oder einer Batterie verbunden. Die Stränge 12, 14 sind gewöhnlich über das Eisen des Statorblechpaketes transformatorisch miteinander gekoppelt.

Der Hallgenerator 18 ist einerseits über einen Widerstand 28 mit der Plusleitung 24 sowie andererseits mit der Minusleitung 26 verbunden. Das Ausgangssignal des Hallgenerators 18 wird über Widerstände 30, 32 und einen Kondensator 34 den beiden Eingängen IN1 und IN2 eines Mikrocontrollers (µC) 36 zugeführt. Der µC 36 ist mit seinem Anschluss VCC an die Plusleitung 24 und mit seinem Anschluss GND an die Minusleitung 26 angeschlossen. Zwischen Plusleitung 24 und Minusleitung 26 ist ein Speicherkondensator 38 angeordnet. Der µC 36 erzeugt Signale OUT1 und OUT2 zur Steuerung der Endstufentransistoren 20, 22 und bewirkt gleichzeitig eine Blockiersicherung des Motors 10. Die Steuersignale werden dabei mittels in dem µC 36 ablaufenden Programm- oder Steuerroutinen erzeugt. Das Signal OUT1 wird über einen Widerstand 40 dem Gate des Endstufentransistors 20 zugeführt. In gleicher Weise wird das Signal OUT2 über einen Widerstand 42 dem Gate des Endstufentransistors 22 zugeführt. Das Gate des Endstufentransistors 20 ist über einen Widerstand 44 mit der Minusleitung 26 verbunden. In gleicher Weise ist das Gate des Endstufentransistors 22 über einen Widerstand 46 mit der Minusleitung 26 verbunden.

Die Sourceanschlüsse S der Endstufentransistoren 20, 22 sind über einen Steuertransistor 48 (MOSFET) mit der Minusleitung 26 verbunden. Das Gate G des Steuertransistors 48 ist mit einem zwischen Plusleitung 24 und Minusleitung 26 angeordneten regelbaren Widerstand 50 verbunden. Erfindungsgemäß werden die Endstufentransistoren 20, 22 durch den Steuertransistor 48 im Sourcebereich jeweils derart angesteuert, dass der Strom durch die Statorwicklungen 12, 14 zumindest während der Kommutierung im Wesentlichen konstant ist. Hierzu werden die Endstufentransistoren 20, 22 als Abschnürstromquelle betrieben, vgl. Tietze/Schenk, Halbleiter-Schaltungstechnik, 12. Auflage, S. 411f. Erfolgt die Ansteuerung beispielsweise des Endstufentransistors 20 durch das Steuersignal OUT1, so wirkt der Steuertransistor 48 als Widerstand gegen Masse. Die Stromstärke durch die Statorwicklungen 12, 14 und damit die Drehzahl des Motors 10 lässt sich in dieser Ausführungsform der Erfindung durch den regelbaren Widerstand 50 am Gate des Steuertransistors 48 einstellen. Diese Ausführungsform ist besonders für solche Anwendungsfälle geeignet, bei denen eine Änderung der Motordrehzahl während des Betriebes nicht erforderlich ist.

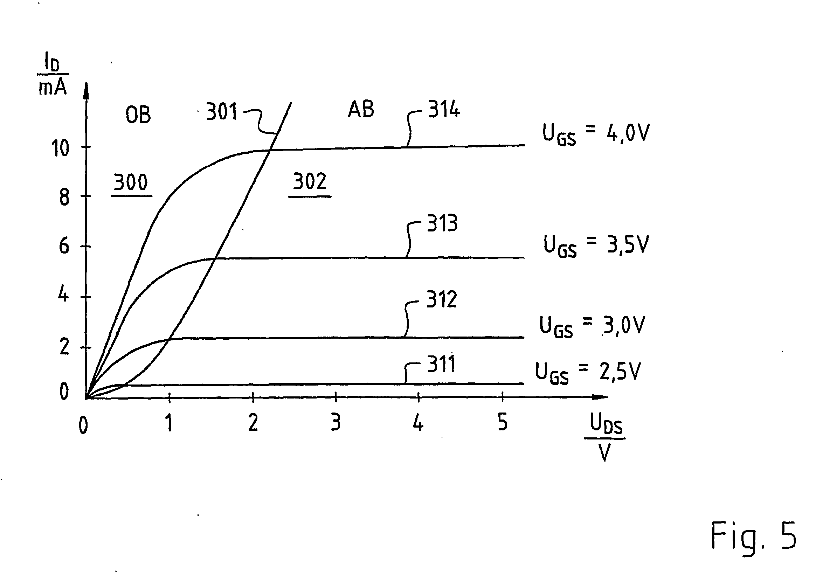

**Fig. 5** zeigt ein Ausgangskennlinienfeld eines n-Kanal-Feldeffekttransistors mit vier Kennlinien 311, 312, 313 und 314. Es ist für vier verschiedene Gate-Source-Spannungen U_{GS} = 2,5 V, 3,0 V, 3,5 V und 4,0 V der Drain-Strom I_{D} als Funktion der Drain-Source-Spannung U_{DS} aufgetragen. Das Kennlinienfeld zeigt einen ohmschen Bereich (ohmic region, triode region) OB 300, in dem die Kennlinien 311 bis 314 beim Ursprung U_{DS} = 0 V nahezu linear durch den Ursprung verlaufen und damit ein Verhalten wie bei einem ohmschen Widerstand vorliegt. Neben dem ohmschen Bereich OB 300 gibt es einen so genannten Abschnürbereich AB 302, in dem die Kennlinien 311 bis 314 einen nahezu konstanten Drainstrom I_{D} aufweisen. Eine Linie 301 markiert die Grenze zwischen dem ohmschen Bereich OB 300 und dem Abschnürbereich AB 302.

Über den Steuertransistor 48 aus Fig. 1 wird erreicht, dass die Drain-Source-Spannung U_{DS} geändert wird, und damit wird auch die Höhe des Stroms (i) durch die Statorwicklung 12 beeinflusst. Da die Grenze 301 zwischen dem ohmschen Bereich OB 300 und dem Abschnürbereich AB 302 ebenfalls abhängig von der Drain-Source-Spannung U_{DS} ist, wird gegebenenfalls auch erreicht, dass die Transistoren 20, 22 im Abschnürbereich arbeiten.

Alle Typen von Feldeffekttransistoren weisen einen solchen Abschnürbereich auf.

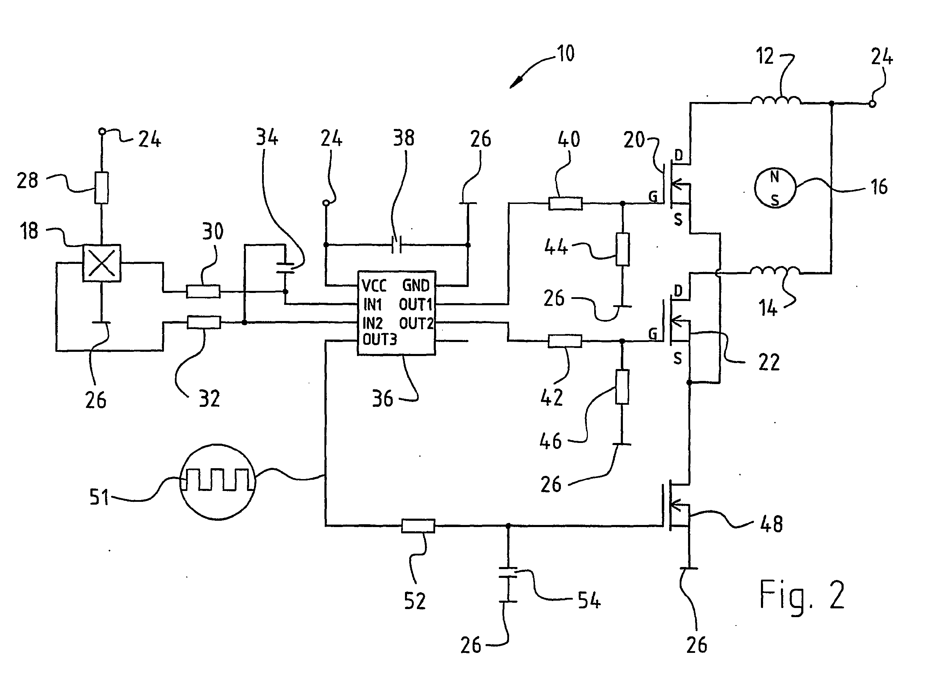

**Fig. 2** zeigt das Schaltbild eines erfindungsgemäßen Motors 10 in einer zweiten Ausführungsform, bei der eine Regelung der Motordrehzahl problemlos möglich ist.

Für diese variable Steuerung ist das Gate G des Steuertransistors 48 über einen aus einem Widerstand 52 und einem Kondensator 54 gebildeten Tiefpassfilter mit dem Ausgang OUT 3 eines µC 36 verbunden. Der Tiefpassfilter wandelt dabei die digitalen Steuersignale 51 des µC 36 in ein analoges Spannungssignal um, dessen Höhe vom Tastverhältnis der Steuersignale 51 abhängig ist. Die übrige Schaltungsanordnung entspricht der aus Fig. 1. Durch eine entsprechende Ansteuerung des Steuertransistors 48 wird sichergestellt, dass der Strom durch die Statorwicklungen 12, 14 im Wesentlichen konstant ist. Die Änderung der Leitfähigkeit des Steuertransistors 48 und damit eine Änderung der Motordrehzahl erfolgt entsprechend der in dem µC 36 ablaufenden Programm- oder Steuerroutinen.

Wird der Steuertransistor 48 derart angesteuert, dass er einen hohen Widerstand und damit eine schlechte Leitfähigkeit aufweist, steigt das Potential an der Source des jeweiligen Endstufentransistors 20, 22. Es fließt weniger Strom durch den Endstufentransistor 20, 22. Er geht in den Abschnürbereich über.

Wird der Steuertransistor 48 derart angesteuert, dass er einen geringen Widerstand und damit eine hohe Leitfähigkeit aufweist, ist das an der Source des jeweiligen Endstufentransistors 20, 22 anliegende Potential gering. Die damit verbundene hohe Gate-Source-Spannung führt zu einer entsprechend hohen Stromstärke in der Statorwicklung 12, 14.

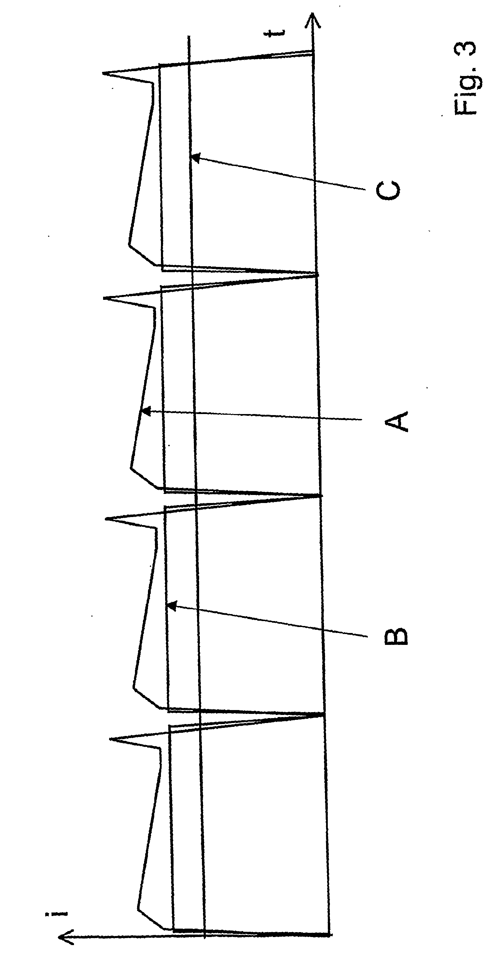

Wie in **Fig. 3** dargestellt, wird mit der vorliegenden Erfindung ein Glätten der Stromkennlinie erreicht. Im Gegensatz zu herkömmlichen Kommutierungsverfahren (Kurve A) wird der Strom durch eine Statorwicklung erfindungsgemäß entweder während der Bestromung (Kurve B) oder während des gesamten Betriebes des Motors (Kurve C) im Wesentlichen konstant gehalten.

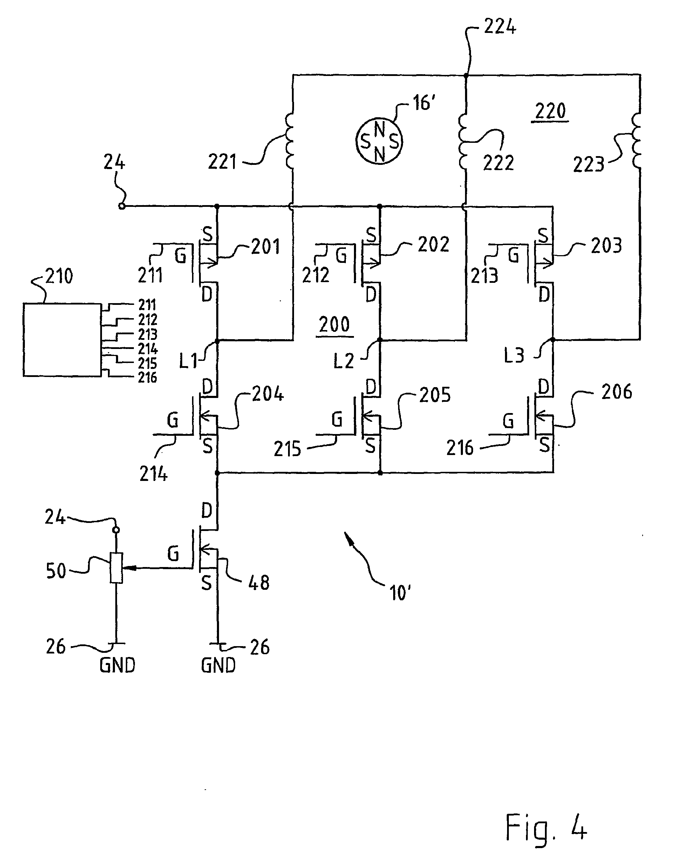

**Fig. 4** zeigt ein erfindungsgemäßes Ausführungsbeispiel einer Vollbrückenschaltung für einen dreiphasigen elektronisch kommutierten Motor 10'.

Gleiche bzw. gleich wirkende Bauteile sind mit den gleichen Bezugszeichen versehen und werden nicht nochmals erläutert.

Der Stator 220 weist drei sternförmig geschaltete Wicklungsstränge 221, 222, 223 auf, welche zwischen einem Sternpunkt 224 und den Wicklungsanschlüssen L1, L2 und L3 geschaltet sind.

Die Endstufe 200 ist als Vollbrücke ausgebildet und weist drei obere Transistoren 201, 202, 203 auf, welche zwischen der Plusleitung 24 und den Wicklungsanschlüssen L1, L2 bzw. L3 geschaltet sind, sowie drei untere Transistoren 204, 205, 206, welche zwischen den Wicklungsanschlüssen L1, L2 bzw. L3 und dem Steuertransistor 48 geschaltet sind.

Die Gate-Anschlüsse G der Endstufentransistoren 201 bis 206 werden über Anschlüsse 211 bis 216 durch eine Endstufenansteuerung 210 gesteuert.

Der Steuertransistor 48 wird derart eingestellt, dass die unteren Transistoren 204, 205, 206 jeweils im Abschnürbereich arbeiten.

Die Kommutierung erfolgt durch die Besteuerung der Endstufentransistoren 211 bis 216 und damit der Wicklungsanschlüsse L1, L2, L3 in Abhängigkeit von der Stellung des Rotors 16'.

Dabei werden in einer bevorzugten Ausführungsform die jeweiligen oberen Transistoren 201, 202, 203 bzw. unteren Transistoren 204, 205, 206 während der gesamten Kommutierungsdauer leitend geschaltet. In einer weiteren bevorzugten Ausführungsform sind bei einem Bestromungswechsel Kommutierungspausen vorgesehen, um einen Kurzschluss zu vermeiden. Weiterhin ist es möglich, die oberen Transistoren 201, 202, 203 mit einem getakteten Steuersignal 201, 202, 203 zu steuern.

Naturgemäß sind im Rahmen der vorliegenden Erfindung vielfache Abwandlungen und Modifikationen möglich.

## Patentansprüche

1. Elektronisch kommutierter Motor (10),
mit einem permanentmagnetischen Rotor (16) und einem Stator, dem mindestens ein Statorwicklungsstrang (12, 14) zugeordnet ist,
mit einem Mikrocontroller (36) zum Erzeugen mindestens eines Kommutierungssignals (OUT1, OUT2) zum Aus- und Einschalten des Stromes (i) in diesem Statorwicklungsstrang (12, 14),
und mit einer Einrichtung (36; 50) zum Erzeugen mindestens eines zweiten Signals (51) zur Beeinflussung der Höhe des Stromes (i), welcher im Betrieb in diesem Statorwicklungsstrang (12, 14) fließt, wenn dieser durch das Kommutierungssignal eingeschaltet ist,
ferner mit einem ersten Feldeffekttransistor (22), welcher mit dem zugeordneten Statorwicklungsstrang (12, 14) in Reihe geschaltet ist und dessen Gate das Kommutierungssignal (OUT1, OUT2) über einen Spannungsteiler (42, 46) zuführbar ist, wobei ein Widerstand (46) dieses Spannungsteilers (42, 46) zwischen diesem Gate und einem Punkt (26) vorgegebenen Potenzials angeordnet ist,
und mit einem zweiten Feldeffekttransistor (48), welcher zwischen der Source (S) des ersten Feldeffekttransistors (22) und dem Punkt (26) vorgegebenen Potenzials angeordnet ist,
und dessen Gate das zweite Signal (51) zuführbar ist, um den Spannungsabfall (U_{DS}) am zweiten Feldeffekttransistor (48) abhängig von diesem zweiten Signal (51) zu verändern und **dadurch** die Abschnürspannung (pinch-off voltage) (U_{GS}) des ersten Feldeffekttransistors (22) zu beeinflussen.

2. Motor nach Anspruch 1, bei welchem das zweite Signal ein PWM-Signal (51) ist, dessen Tastverhältnis den Spannungsabfall am zweiten Feldeffekttransistor (48) steuert.

3. Motor nach Anspruch 1 oder 2, bei welchem das zweite Signal ein PWM-Signal (51) ist, das dem zweiten Feldeffekttransistor (48) als geglättetes Signal zuführbar ist.

4. Motor nach Anspruch 3, bei welchem zur Glättung des zweiten Signals (51) zwischen der Quelle (36) desselben und dem Gate des zweiten Feldeffekttransistors (48) ein Siebglied (52, 54) vorgesehen ist.

5. Motor nach einem der Ansprüche 1 bis 4, bei welchem das zweite Signal vom Ausgangssignal (51) eines im Mikrocontroller (36) implementierten Drehzahlreglers für die Drehzahl des Motors (10) abgeleitet ist.

6. Motor nach einem der vorgehenden Ansprüche, welcher eine Mehrzahl von Statorwicklungssträngen (12, 14) aufweist, welchen jeweils ein Feldeffekttransistor (20, 22) zugeordnet ist, dessen Gate vom Mikrocontroller (36) ein zugeordnetes Kommutierungssignal (OUT1, OUT2) zum Ein- und Ausschalten des Stromes in diesem Statorwicklungsstrang zuführbar ist, wobei der zweite Feldeffekttransistor (48) zwischen den Source-Anschlüssen der erstgenannten Feldeffekttransistoren (20, 22) und dem Punkt (26) vorgegebenen Potenzials angeordnet ist.

7. Motor nach einem der vorhergehenden Ansprüche, bei welchem die Einrichtung zum Erzeugen des zweiten Signals (51) als Mikrocontroller (36) ausgebildet ist.

8. Motor nach Anspruch 7, bei welchem der Mikrocontroller (36) zum Erzeugen des zweiten Signals (51) einen PWM-Generator aufweist, der vom Programm des Mikrocontrollers (36) gesteuert ist.

## Claims

1. Electronically commutated motor (10),
with a permanently magnetic rotor (16) and a stator, to which at least one stator winding phase (12, 14) is assigned,
with a microcontroller (36) to generate at least one commutation signal (OUT1, OUT2) for switching the current (i) on and off in this stator winding phase (12, 14),
and with a device (36; 50) to generate at least one second signal (51) to affect the level of the current (i) which flows in operation in this stator winding phase (12, 14) if this is switched on by the commutation signal,
also with a first field effect transistor (22), which is connected in series with the assigned stator winding phase (12, 14), and to the gate of which the commutation signal (OUT1, OUT2) can be fed via a voltage divider (42, 46), a resistor (46) of this voltage divider (42, 46) being arranged between this gate and a point (26) of predetermined potential,
and with a second field effect transistor (48), which is arranged between the source (S) of the first field effect transistor (22) and the point (26) of predetermined potential,
and to the gate of which the second signal (51) can be fed, to change the voltage drop (UDS) at the second field effect transistor (48) depending on this second signal (51), and thus to affect the pinch-off voltage (UGS) of the first field effect transistor (22).

2. Motor according to Claim 1, wherein the second signal is a PWM signal (51), the duty factor of which controls the voltage drop at the second field effect transistor (48).

3. Motor according to Claim 1 or 2, wherein the second signal is a PWM signal (51), which can be fed to the second field effect transistor (48) as a smoothed signal.

4. Motor according to Claim 3, wherein to smooth the second signal (51), between its source (36) and the gate of the second field effect transistor (48), a filter (52, 54) is provided.

5. Motor according to one of Claims 1 to 4, wherein the second signal is derived from the output signal (51) of a rotational speed regulator, which is implemented in the microcontroller (36), for the rotational speed of the motor (10).

6. Motor according to one of the preceding claims, which has multiple stator winding phases (12, 14), to each of which a field effect transistor (20, 22), to the gate of which the microcontroller (36) can feed an assigned commutation signal (OUT1, OUT2) to switch the current on and off in this stator winding phase, is assigned, the second field effect transistor (48) being arranged between the source terminals of the first-mentioned field effect transistors (20, 22) and the point (26) of predetermined potential.

7. Motor according to one of the preceding claims, wherein the device to generate the second signal (51) is in the form of a microcontroller (36).

8. Motor according to Claim 7, wherein the microcontroller (36) to generate the second signal (51) has a PWM generator, which is controlled by the program of the microcontroller (36).

## Revendications

1. Moteur à commutation électronique (10),
avec un rotor (16) à aimant permanent et un stator auquel est associée au moins une phase d' enroulement de stator (12, 14),
avec un microcontrôleur (36) pour générer au moins un signal de commutation (OUT1, OUT2) pour désactiver et activer le courant (i) dans cette phase d'enroulement de stator (12, 14),
et avec un dispositif (36 ; 50) pour générer au moins un deuxième signal (51) servant à influencer la valeur du courant (i) qui circule en fonctionnement dans cette phase d'enroulement de stator (12, 14) quand celle-ci est activée par le signal de commutation,
ainsi qu'avec un premier transistor à effet de champ (22) qui est connecté en série avec la phase d'enroulement de stator (12, 14) associée et à la grille duquel le signal de commutation (OUT1, OUT2) peut être amené via un diviseur de tension (42, 46), une résistance (46) de ce diviseur de tension (42, 46) étant disposée entre cette grille et un point (26) de potentiel prédéfini,
et avec un deuxième transistor à effet de champ (48) qui est disposé entre la source (S) du premier transistor à effet de champ (22) et le point (26) de potentiel prédéfini,
et à la grille duquel le deuxième signal (51) peut être amené pour modifier la chute de tension (U_{DS}) au deuxième transistor à effet de champ (48) en fonction de ce deuxième signal (51) et, par ce moyen, influencer la tension de blocage (pinch-off voltage) (U_{GS}) du premier transistor à effet de champ (22).

2. Moteur selon la revendication 1, dans lequel le deuxième signal est un signal PWM (51) dont le rapport cyclique commande la chute de tension sur le deuxième transistor à effet de champ (48).

3. Moteur selon la revendication 1 ou 2, dans lequel le deuxième signal est un signal PWM (51) qui peut être amené sous forme de signal lissé au deuxième transistor à effet de champ (48).

4. Moteur selon la revendication 3, dans lequel pour lisser le deuxième signal (51), il est prévu un élément de filtrage (52, 54) entre la source (36) de ce deuxième signal (51) et la grille du deuxième transistor à effet de champ (48).

5. Moteur selon l'une des revendications 1 à 4, dans lequel le deuxième signal est dérivé du signal de sortie (51) d'un régulateur de vitesse implémenté dans le microcontrôleur (36) pour la vitesse de rotation du moteur (10).

6. Moteur selon l'une des revendications précédentes, lequel présente une pluralité de phases d'enroulement de stator (12, 14) à chacune desquelles est associé un transistor à effet de champ (20, 22) à la grille duquel peut être amené du microcontrôleur (36) un signal de commutation (OUT1, OUT2) associé pour activer et désactiver le courant dans cette phase d'enroulement de stator, le deuxième transistor à effet de champ (48) étant disposé entre les connexions de source des transistors à effet de champ (20, 22) mentionnés en premier lieu et le point (26) de potentiel prédéfini.

7. Moteur selon l'une des revendications précédentes, dans lequel le dispositif pour générer le deuxième signal (51) est réalisé sous la forme d'un microcontrôleur (36).

8. Moteur selon la revendication 7, dans lequel le microcontrôleur (36) servant à générer le deuxième signal (51) présente un générateur PWM qui est commandé par le programme du microcontrôleur (36).
